# EUROPÄISCHE PATENTSCHRIFT

(11) **EP 1 193 818 B1**
(45) Veröffentlichungstag und Bekanntmachung des Hinweises auf die Patenterteilung: **23.01.2008**
(21) Anmeldenummer: 01121331.1
(22) Anmeldetag: 06.09.2001
(51) Int. Cl.: H02B 1/38

(54) **Tür für ein elektrische Bauelemente aufnehmendes Gehäuse**
Door for a cabinet for electrical modules
Porte pour armoire à modules électriques

(30) Priorität: 27.09.2000 DE 10047774
(43) Veröffentlichungstag der Anmeldung: 03.04.2002
(73) Patentinhaber: Rittal GmbH & Co. KG, 35745 Herborn (DE)
(72) Erfinder: Hartel, Marc, 35447 Reiskirchen (DE)
(74) Vertreter: Fleck, Hermann-Joseph

(56) Entgegenhaltungen:
- EP-A- 0 891 027
- US-A- 5 016 949

## Beschreibung

Die Erfindung betrifft eine Tür für ein elektrische Bauelemente aufnehmendes Gehäuse, insbesondere Schaltschrank mit einem Türrahmen, der zwei zueinander parallel beabstandete, vertikale Rahmenprofile aufweist, die an ihren länggseitigen Enden mittels horizontaler Querstreben miteinander verbunden sind, wobei an den vertikalen Rahmenprofilen und/oder den Querstreben auf der Türaußenseite vertikale und/oder horizontale Abdeckprofile angebracht sind, und wobei die vertikalen Rahmenprofile Aufnahmen aufweisen, in die wenigstens eine Verkleidungsplatte einsetzbar ist, die den von dem Türrahmen umgebenenen Füllungsbereich zumindest teilweise überdeckt.

Eine derartige Tür ist aus der DE 42 42 589 A1 bekannt. Hierbei ist ein Türrahmen verwendet, der aus vier querschnittsgleichen Rahmenprofilen zusammengesetzt ist. Die Rahmenprofile sind an ihren längsseitigen Enden auf Gehrung geschnitten und hier aneinandergesetzt. Zur Verbindung der Rahmenprofile werden Eckverbinder verwendet. Diese sind mit Steckansätzen in Hohlkammeraufnahmen der Rahmenprofile eingesetzt. Der zusammengesetzte Türrahmen kann frontseitig mit Abdeckprofilen verkleidet werden. Die Abdeckprofile bilden zusammen mit den Rahmenprofilen des Türrahmens Klemmaufnahmen, in denen eine Verkleidungsplatte gehalten ist. Die Verkleidungsplatte überdeckt dann den von dem Türrahmen umschlossenen Füllungsbereich.

Es ist Aufgabe der Erfindung, eine Tür der eingangs erwähnten Art zu schaffen, die eine modulare Gestaltung des Füllungsbereiches und dabei einen einfachen Aufbau zulässt.

Diese Aufgabe wird dadurch gelöst, dass die Aufnahmen der vertikalen Rahmenprofile als Nuten ausgebildet sind, in denen die Verkleidungsplatten mit ihren Rändern gehalten sind, dass die Querstreben an ihren längsseitigen Enden Ansätze aufweisen, die jeweils mindestens einen Steckansatz tragen, und dass die Steckansätze in Steckaufnahmen der vertikalen Rahmenprofile festgelegt sind.

In die Nuten der vertikalen Rahmenprofile können eine oder aber auch mehrere Verkleidungsplatten eingeschoben werden. Wenn mehrere Verkleidungsplatten verwendet sind, so sind diese in Nut-Längsrichtung hintereinander gestaffelt. Auf diese Weise lässt sich der Füllungsbereich abhängig von den gestalterischen und funktionellen Anforderungen des Benutzers aufbauen. Dabei ist die Tür in einfacher Bauweise gehalten. Die Querstreben weisen bereits die erforderlichen Verbindungselemente zur Ankopplung an die vertikalen Rahmenprofile auf. Damit kann auf aufwendige Zusatz-Verbinder verzichtet werden.

Gemäß einer bevorzugten Ausgestaltungsvariante der Erfindung ist es vorgesehen, dass die in Längsrichtung der vertikalen Rahmenprofile verlaufende Erstreckung des Aufnahmebereiches für die Verkleidungsplatten einem ganzzahligen Vielfachen eines Rastermaßes entspricht, und dass die Verkleidungsplatten eine im Längsrichtung der vertikalen Rahmenprofile verlaufende Abmessung aufweisen, die einem ganzzahligen Vielfachen dieses Rastermaßes entspricht. Der Aufnahmebereich kann auf diese Weise mit normierten Verkleidungsplatten nach der Art eines Baukastens vollständig ausgefüllt werden. Dabei kann es vorgesehen sein, dass die Verkleidungsplatten einheitliche Abmessungen in Längsrichtung der vertikalen Rahmenprofile aufweisen.

Die Verkleidungsplatten lassen sich auch in die Klimatisierungsvorgänge des Gehäuses einbeziehen. Hierzu können sie entweder mit Lochungen oder als geschlossene Abdeckelemente ausgebildet sein. Über die Lochungen ist ein Wärmetausch mit der Umgebung möglich.

Eine mögliche Erfindungsvariante kann dergestalt sein, dass die Querstreben eine Steckplatte aufweisen, die zwischen den vertikalen Rahmenprofilen angeordnet und mit ihren Rändern in die Nuten der vertikalen Rahmenprofile eingesetzt sind, und dass die Steckplatten horizontale Abschlussränder aufweisen, die den horizontalen Ränder der endseitig in den Füllungsbereich eingesetzten Verkleidungsplatte (-n) gegenüberliegen. Die Steckplatten verschließen den Aufnahmbereich für die Verkleidungsplatten und halten diese damit in den Nuten. Darüberhinaus liefern sie auch einen Betrag für die Verwindungssteifigkeit der Tür. Eine einfache Montage der Abdeckprofile ist beispielsweise dann möglich, wenn vorgesehen ist, dass die vertikalen Rahmenprofile eine Stützfläche aufweisen, in die wenigstens eine in Profillängsrichtung verlaufende Befestigungsnut eingearbeitet ist, und dass die vertikalen Abdeckprofile Raststege besitzen, die in den Befestigungsnuten verrastet sind.

Die Funktionalität der Tür kann zusätzlich dann erweitert werden, wenn vorgesehen ist, dass wenigstens eine der horizontalen Querstreben ein horizontales Abdeckprofil trägt, das mit einer Aufnahme ausgestattet ist, und dass in die Aufnahme ein Anzeigeelement eingesetzt ist.

Dabei kann es insbesondere vorgesehen sein, dass das Anzeigeelement als Display ausgebildet ist, und dass das horizontale Abdeckprofil eine Kabeldurchführung aufweist, die fluchtend zu einer Kabeldurchführung der Querstrebe angeordnet ist. Die Ansteuerung des Displays kann dann von der Innenseite des Gehäuses erfolgen.

Um die Stirnseiten der vertikalen Rahmenprofile sichtgeschützt anordnen zu können, ist eine mögliche Erfindungsvariante dergestalt, dass die Querstreben Verblendungsstücke aufweisen, die die stirnseitigen Enden der vertikalen Rahmenprofile überdecken.

Die vertikalen Rahmenprofile können als Strangpressprofile ausgebildet sein, be denen die Nuten einstückig eingeformt sind.

Die Erfindung wird im Folgenden anhand eines in der Zeichnung dargestellten Ausführungsbeispieles näher erläutert. Es zeigen:
- Fig. 1: eine Tür in perspektivischer Explosionsdarstellung,
- Fig. 2: einen Türrahmen, der in Fig. 1 dargestellten Tür in perspektivischer Darstellung,
- Fig. 3: den Türrahmen gemäß Fig. 2 mit zwei Verkleidungsplatten in perspektivischer Darstellung und

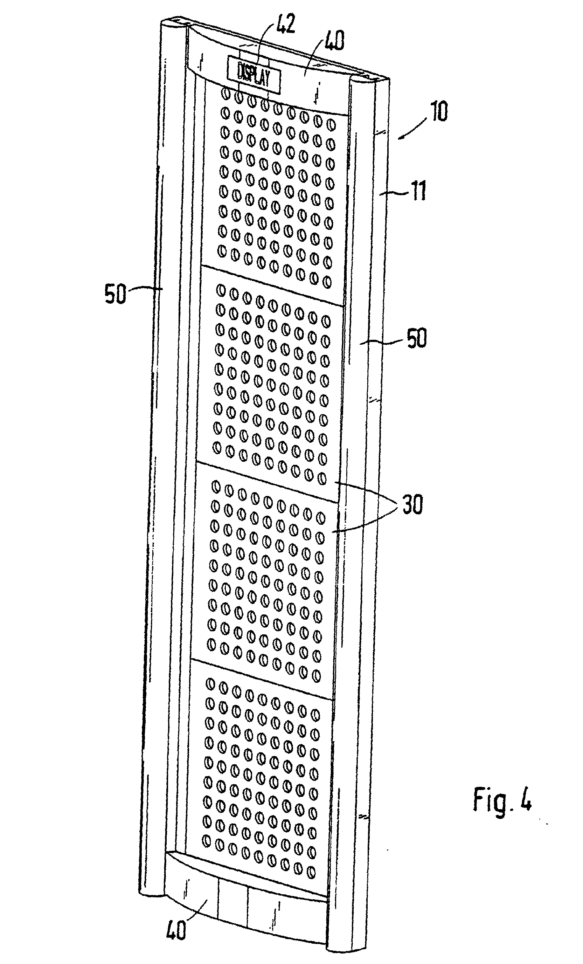

- Fig. 4: eine Zusammenbaudarstellung der in Fig. 1 dargestellten Tür

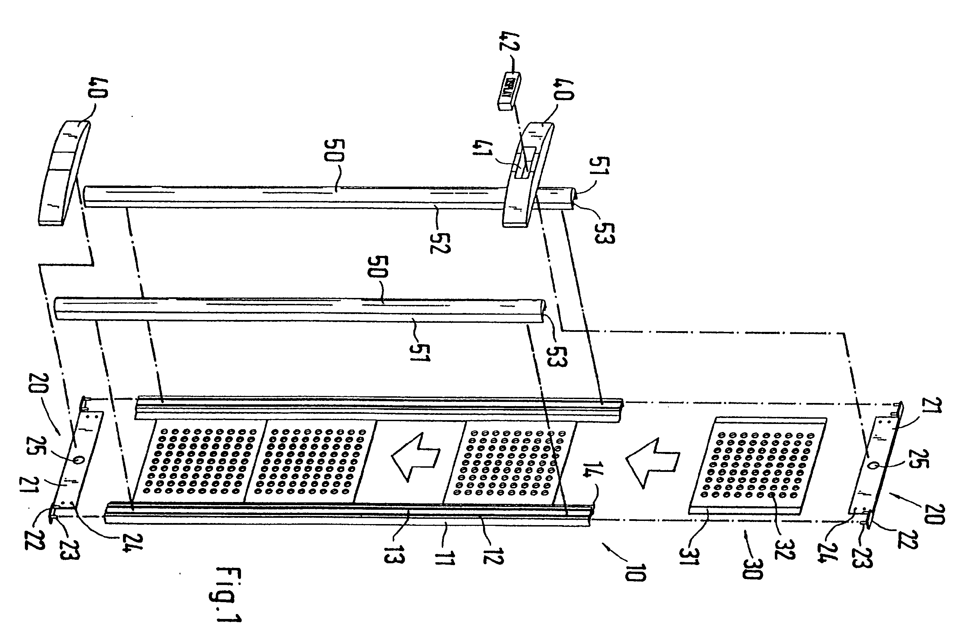

In der Fig. 1 ist eine Tür dargestellt, die einen Türrahmen 10 aufweist. Der Türrahmen 10 ist aus zwei vertikalen Rahmenprofilen 11 und zwei horizontalen Querstreben 20 zusammengesetzt. Die vertikalen Rahmenprofile 11 sind als Strangpressprofile ausgebildet und weisen eine in Längssrichtung verlaufende Nut 14 auf. Vorderseitig sind die vertikalen Rahmenprofile 11 mit einer Stützfläche 13 versehen, in die zwei Befestigungsnuten 12 eingearbeitet sind. Die vertikalen Rahmenprofile 11 können mittels der Querstreben 20 miteinander verbunden werden. Die Querstreben 20 sind als Stanz-Biegeteile aus einem Blechzuschnitt gefertigt. Sie weisen eine vertikale Steckplatte 21 auf, die jeweils mit einem kreisrunden Durchbruch 25 versehen ist. Im Bereich der Schmalseiten der Steckplatte 21 sind jeweils zwei Schraubaufnahmen 24 vorgesehen. An den längsseitigen Enden der Querstrebe 20 sind Ansätze 22 angeformt. Die Ansätze 22 tragen jeweils zwei Steckansätze 23. Die Steckansätze 23 können in korrespondierende Steckaufnahmen der vertikalen Rahmenprofile 11 eingesetzt und hierin befestigt werden. Beispielsweise ist es denkbar, dass die Steckansätze 23 an den vertikalen Rahmenprofilen 11 geklemmt gehalten sind. Die Befestigungsaufnahmen sind vorzugsweise als kanalartige Aufnahmeräume ausgebildet, die einstückig an das vertikale Rahmenprofil 11 anprofiliert sind.

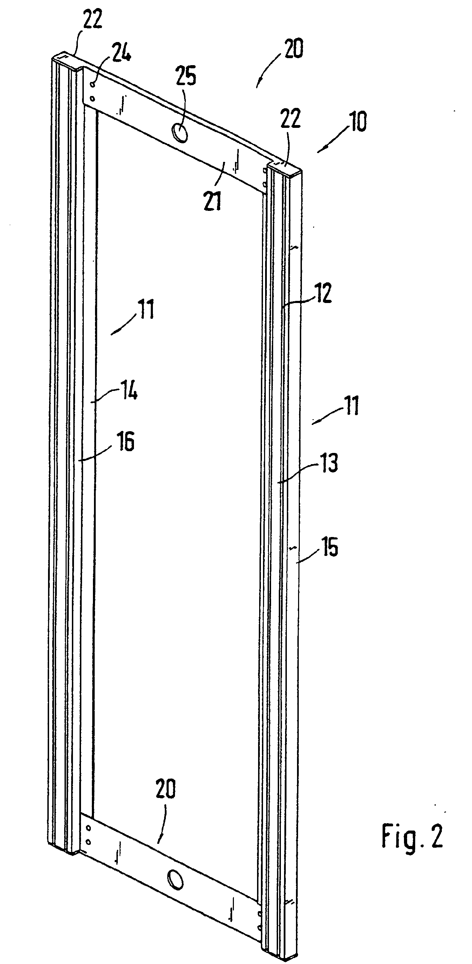

Mittels der beiden Querstreben 20 kann der in Fig. 2 dargestellt Türrahmen 10 aufgebaut werden. Wie diese Darstellung erkennen lässt, umgibt der Türrahmen einen Füllungsbereich, der mit Verkleidungsplatten 30 aufgefüllt werden kann.

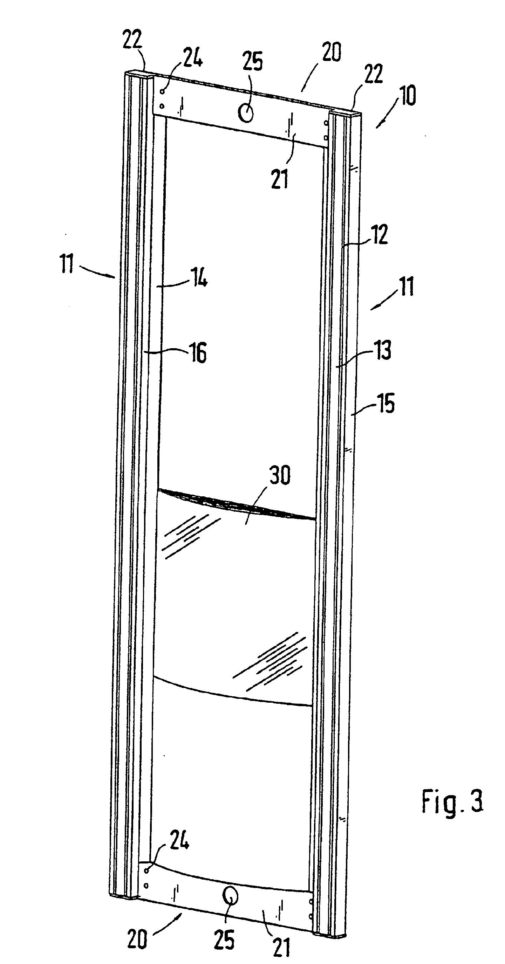

Wie Fig. 1 erkennen lässt, sind die Verkleidungsplatten 30 mit ihren Rändern 31 in die Nuten 14 der vertikalen Rahmenprofile 11 einsetzbar. Die Verkleidungsplatten 30 gemäß Fig. 1 sind mit einer Lochung 32 versehen. Es ist jedoch auch denkbar, das Verkleidungsplatten mit geschlossener Vorderfront eingesetzt werden, wie dies beispielsweise die Fig. 3 veranschaulicht. Hier ist als Verkleidungsplatte 30 eine Glasscheibe verwendet. Die Verkleidungsplatten 30 erstrecken sich jeweils über ein Viertel der Höhe des Füllungsbereichs. Damit können vier Verkleidungsplatten 30 übereinanderliegend in die Nuten 14 eingeschoben werden. Aufgrund dieser Anordnung lässt sich insbesondere auch eine modulare Bauweise ermöglichen. Demgemäß können Verkleidungsplatten mit Lochungen 52 und geschlossener Oberfläche miteinander kombiniert werden. Denkbar ist es auch, Verkleidungsplatten mit Werbeaufdruck etc. einzusetzen. Zum Aufbau der Tür wird zunächst eine Querstrebe 20 mit den beiden vertikalen Rahmenprofilen 11 verbunden. Dabei greift die Steckplatte 21 mit ihren, den vertikalen Rahmenprofilen 11 zugeordneten Rändern 31 in die Nuten 14 ein. Damit sind die Nuten 14 verschlossen. Anschließend lassen sich die Verkleidungsplatten 30 in die Nuten 14 einstecken, wobei die unterste Verkleidungsplatte 30 an der Steckplatte 21 der unteren montierten Querstrebe 20 anschlägt. Wenn der Erfüllungsbereich mit den Verkleidungsplatten 30 ausgekleidet ist, kann die obere Querstrebe 20 montiert werden. Dabei greift wiederum die Steckplatte 21 in die Nuten 14 ein und verhindert so ein Herausfallen der Verkleidungsplatten 30.

Wie Fig. 1 erkennen lässt, kann der Türrahmen 10 mittels frontseitig aufgesetzter horizontaler und vertikaler Abdeckprofile 40 und 50 verkleidet werden. Die horizontalen Abdeckprofile 40 sind dabei auf die Steckplatten 21 der Querstreben 20 aufgesetzt. Mittels Befestigungsschrauben, die durch die Schraubaufnahmen 24 der Steckplatten 21 hindurchgeführt und in entsprechende Schraubaufnahmen 24 der horizontalen Abdeckprofile 40 eingeschraubt sind, kann eine sichere Festlegung der horizontalen Abdeckprofile 40 gewährleistet werden. Die Befestigungsschrauben sind alleine von der Rückseite der Tür her zugänglich, so dass ein Manipulationszugriff unmöglich ist. Die obere Querstrebe 14 besitzt eine Aufnahme 41, in die ein Anzeigeelement 42, vorliegend ein Display, eingesetzt werden kann. Denkbar ist es auch, dass in die Aufnahme 41 ein Werbeträger eingebaut wird. Das Display kann mittels Versorgungsleitungen betrieben werden. Die Versorgungsleitungen sind über den Durchbruch 25 der Querstrebe 20 zur Türrückseite geführt und können hier im Schaltschrank-Innenraum verdrahtet werden.

Die vertikalen Rahmenprofile 50 weisen auf ihren, den vertikalen Rahmenprofilen 11 zugekehrten Rückseiten zwei Raststege 53 auf. Diese Raststege 53 verrasten in den Befestigungsnuten 12 der vertikalen Rahmenprofile 11. Die Längssseiten der vertikalen Rahmenprofile 11 sind mittels Sichtleisten 51 und 52 abgedeckt, die einstückig an die vertikalen Abdeckprofile 50 angeformt sind.

## Patentansprüche

1. Tür für ein elektrische Bauelemente aufnehmendes Gehäuse, insbesondere Schaltschrank mit einem Türrahmen (10), der zwei zueinander parallel beabstandete, vertikale Rahmenprofile (11) aufweist, die an ihren länggseitigen Enden mittels horizontaler Querstreben (20) miteinander verbunden sind, wobei an den vertikalen Rahmenprofilen und/oder den Querstreben auf der Türaußenseite vertikale und/oder horizontale Abdeckprofile angebracht sind, und wobei die vertikalen Rahmenprofile (11) Aufnahmen aufweisen, in die wenigstens eine Verkleidungsplatte (30) einsetzbar ist, die den von dem Türrahmen (10) umgebenenen Füllungsbereich zumindest teilweise überdeckt,
**dadurch gekennzeichnet,**
**dass** die Aufnahmen der vertikalen Rahmenprofile (11) als Nuten (14) ausgebildet sind, in denen die Verkleidungsplatten (30) mit ihren Rändern (31) gehalten sind,
**dass** die Querstreben (20) an ihren längsseitigen Enden Ansätze (22) aufweisen, die jeweils mindestens einen Steckansatz (23) tragen, und
**dass** die Steckansätze in Steckaufnahmen der vertikalen Rahmenprofile (11) festgelegt sind.

2. Tür nach Anspruch 1,
**dadurch gekennzeichnet,**
**dass** die in Längsrichtung der vertikalen Rahmenprofile (11) verlaufende Erstreckung des Aufnahmebereiches für die Verkleidungsplatten (30) einem ganzzahligen Vielfachen eines Rastermaßes entspricht, und
**dass** die Verkleidungsplatten (30) eine im Längsrichtung der vertikalen Rahmenprofile (11) verlaufende Abmessung aufweisen, die einem ganzzahligen Vielfachen dieses Rastermaßes entspricht.

3. Tür nach Anspruch 2,
**dadurch gekennzeichnet,**
**dass** die Verkleidungsplatten (30) einheitliche Abmessungen in Längsrichtung der vertikalen Rahmenprofile (11) aufweisen.

4. Tür nach einem der Ansprüche 1 bis 3,
**dadurch gekennzeichnet,**
**dass** die Verkleidungsplatten (30) in ihrer Sichtfläche eine Lochung (32) aufweisen oder als geschlossene Abdeckelemente ausgebildet sind.

5. Tür nach einem der Ansprüche 1 bis 4,
**dadurch gekennzeichnet,**
**dass** die Querstreben (20) eine Steckplatte (21) aufweisen, die zwischen den vertikalen Rahmenprofilen (11) angeordnet und mit ihren Rändern in die Nuten (14) der vertikalen Rahmenprofile (11) eingesetzt sind, und
**dass** die Steckplatten (21) horizontale Abschlussränder aufweisen, die den horizontalen Ränder der endseitig in den Füllungsbereich eingesetzten Verkleidungsplatte (-n) gegenüberliegen.

6. Tür nach einem der Ansprüche 1 bis 5,
**dadurch gekennzeichnet,**
**dass** die vertikalen Rahmenprofile (11) eine Stützfläche (13) aufweisen, in die wenigstens eine in Profillängsrichtung verlaufende Befestigungsnut (12) eingearbeitet ist, und
**dass** die vertikalen Abdeckprofile (50) Raststege (53) besitzen, die in den Befestigungsnuten (12) verrastet sind.

7. Tür nach einem der Ansprüche 1 bis 6,
**dadurch gekennzeichnet,**
**dass** wenigstens eine der horizontalen Querstreben (20) ein horizontales Abdeckprofil (40) trägt, das mit einer Aufnahme (41) ausgestattet ist, und
**dass** in die Aufnahme (41) ein Anzeigeelement (42) eingesetzt ist.

8. Tür nach Anspruch 7,
**dadurch gekennzeichnet,**
**dass** das Anzeigeelement (42) als Display ausgebildet ist, und
**dass** das horizontale Abdeckprofil (40) eine Kabeldurchführung aufweist, die fluchtend zu einer Kabeldurchführung (25) der Querstrebe (20) angeordnet ist.

9. Tür nach einem der Ansprüche 1 bis 8,
**dadurch gekennzeichnet,**
**dass** die Querstreben (20) Verblendungsstücke (Ansätze (22)) aufweisen, die die stirnseitigen Enden der vertikalen Rahmenprofile (11) überdecken.

10. Tür nach einem der Ansprüche 1 bis 9,
**dadurch gekennzeichnet,**
**dass** die vertikalen Rahmenprofile (11) als Strangpressprofile ausgebildet sind.

## Claims

1. Door for a housing which accommodates electrical components, in particular a switch cabinet, having a door frame (10) which has two vertical frame profiles (11) which are spaced apart parallel to one another and are connected to one another at their longitudinal ends by means of horizontal crossbars (20), it being the case that vertical and/or horizontal covering profiles are fitted, on the outside of the door, on the vertical frame profiles and/or the crossbars, and that the vertical frame profiles (11) have mounts into which can be inserted at least one cladding panel (30) which at least partially covers over the door-panel region enclosed by the door frame (10), **characterized in that** the mounts of the vertical frame profiles (11) are in the form of grooves (14), in which the cladding panels (30) are retained by way of their peripheries (31), **in that** the crossbars (20), at their longitudinal ends, have extensions (22) which each bear at least one plug-in extension (23), and **in that** the plug-in extensions are secured in plug-in mounts of the vertical frame profiles (11).

2. Door according to Claim 1, **characterized in that** the extent of the accommodating region for the cladding panels (30), as seen in the longitudinal direction of the vertical frame profiles (11), corresponds to a whole-numbered multiple of a unit dimension, and **in that** the dimension of the cladding panels (30) in the longitudinal direction of the vertical frame profiles (11) corresponds to a whole-numbered multiple of this unit dimension.

3. Door according to Claim 2, **characterized in that** the cladding panels (30) have standard dimensions in the longitudinal direction of the vertical frame profiles (11).

4. Door according to one of Claims 1 to 3, **characterized in that** the cladding panels (30), over their visible surface, have perforations (32) or are designed in the form of closed covering elements.

5. Door according to one of Claims 1 to 4, **characterized in that** the crossbars (20) have a plug-in plate (21), and each of these are arranged between the vertical frame profiles (11) and are inserted into the grooves (14) of the vertical frame profiles (11) by way of their peripheries, and **in that** the plug-in plates (21) have horizontal terminating peripheries which are located opposite the horizontal peripheries of the cladding panel(s) inserted into the end of the door-panel region.

6. Door according to one of Claims 1 to 5, **characterized in that** the vertical frame profiles (11) have a supporting surface (13) in which is made at least one fastening groove (12) running in the longitudinal profile direction, and **in that** the vertical covering profiles (50) have latching crosspieces (53) which are latched in the fastening grooves (12).

7. Door according to one of Claims 1 to 6, **characterized in that** at least one of the horizontal crossbars (20) bears a horizontal covering profile (40) provided with a mount (41), and **in that** an indicator element (42) is inserted into the mount (41).

8. Door according to Claim 7, **characterized in that** the indicator element (42) is designed in the form of a display, and **in that** the horizontal covering profile (40) has a cable bushing which is arranged in alignment with a cable bushing (25) of the crossbar (20).

9. Door according to one of Claims 1 to 8, **characterized in that** the crossbars (20) have facing pieces (extensions (22)) which cover over the ends of the vertical frame profiles (11).

10. Door according to one of Claims 1 to 9, **characterized in that** the vertical frame profiles (11) are designed in the form of extruded profiles.

## Revendications

1. Porte pour armoire à modules électriques, en particulier une armoire de distribution, avec un cadre de porte (10) qui comprend deux profilés de cadre verticaux parallèles (11) espacés l'un de l'autre qui sont reliés l'un à l'autre à leurs extrémités longitudinales au moyen de traverses horizontales (20), dans lequel des profilés de masquage verticaux et/ou horizontaux sont posés sur les profilés de cadre verticaux et/ou sur les traverses, sur la face extérieure de la porte, et dans lequel les profilés de cadre verticaux (11) présentent des logements dans lesquels on peut insérer au moins une plaque d'habillage (30) qui recouvre au moins en partie la zone de remplissage entourée par le cadre de porte (10), **caractérisée en ce que** les logements des profilés de cadre verticaux (11) sont formés par des rainures (14), dans lesquelles les plaques d'habillage (30) sont maintenues par leurs bords (31), **en ce que** les traverses (20) présentent à leurs extrémités longitudinales des pièces rapportées (22) qui portent chacune au moins un picot (23), et **en ce que** les picots sont maintenus dans des logements d'enfichage des profilés de cadre verticaux (11).

2. Porte selon la revendication 1, **caractérisée en ce que** l'extension de la zone de réception pour les plaques d'habillage (30), orientée dans la direction longitudinale des profilés de cadre verticaux (11), correspond à un multiple entier d'une dimension de grille, et **en ce que** les plaques d'habillage (30) présentent une dimension orientée dans la direction longitudinale des profilés de cadre verticaux (11), qui correspond à un multiple entier de cette dimension de grille.

3. Porte selon la revendication 2, **caractérisée en ce que** les plaques d'habillage (30) présentent des dimensions unitaires dans la direction longitudinale des profilés de cadre verticaux (11).

4. Porte selon l'une quelconque des revendications 1 à 3, **caractérisée en ce que** les plaques d'habillage (30) présentent une perforation (32) dans leur face visible ou sont des éléments de masquage fermés.

5. Porte selon l'une quelconque des revendications 1 à 4, **caractérisée en ce que** les traverses (20) comportent une plaque embrochable (21) qui est disposée entre les profilés de cadre verticaux (11) et qui est insérée par ses bords dans les rainures (14) des profilés de cadre verticaux (11), et **en ce que** les plaques embrochables (21) présentent des bords terminaux horizontaux qui font face aux bords horizontaux de la/des plaque(s) d'habillage introduite(s) par leur extrémité dans la zone de remplissage.

6. Porte selon l'une quelconque des revendications 1 à 5, **caractérisée en ce que** les profilés de cadre verticaux (11) présentent une face d'appui (13), dans laquelle au moins une rainure de fixation (12) orientée dans la direction longitudinale du profilé est usinée, et **en ce que** les profilés de masquage verticaux (50) comportent des nervures d'encliquetage (53) qui sont encliquetées dans les rainures de fixation (12).

7. Porte selon l'une quelconque des revendications 1 à 6, **caractérisée en ce qu'**au moins une des traverses horizontales (20) porte un profilé de masquage horizontal (40) qui est doté d'un logement (41), et **en ce qu'**un élément d'affichage (42) est introduit dans le logement (41).

8. Porte selon la revendication 7, **caractérisée en ce que** l'élément d'affichage (42) est un écran d'affichage, et **en ce que** le profilé de masquage horizontal (40) présente un passage de câble qui est disposé en alignement avec un passage de câble (25) de la traverse (20).

9. Porte selon l'une quelconque des revendications 1 à 8, **caractérisée en ce que** les traverses (20) comportent des pièces de liaison (pièces rapportées (22)) qui recouvrent les extrémités frontales des profilés de cadre verticaux (11).

10. Porte selon l'une quelconque des revendications 1 à 9, **caractérisée en ce que** les profilés de cadre verticaux (11) sont des profilés extrudés.
